# EUROPEAN PATENT APPLICATION

(11) **EP 1 895 787 A1**
(43) Date of publication of application: **05.03.2008**
(21) Application number: 06767784.9
(22) Date of filing: 03.07.2006
(51) Int. Cl.: H04Q 7/22, H04L 12/56, H04M 11/00, H04Q 7/24, H04Q 7/26, H04Q 7/30, H04Q 7/38

(54) **PERSONAL NETWORK MANAGEMENT METHOD AND PERSONAL NETWORK MANAGEMENT APPARATUS**

(30) Priority: 04.07.2005 JP 2005195616; 06.02.2006 JP 2006029060
(71) Applicant: MATSUSHITA ELECTRIC INDUSTRIAL CO., LTD, Kadoma-shi, Osaka 571-8501 (JP)
(72) Inventor: GOMYO, Kazumasa Panasonic Mobile Communications Co.,Ltd, Kanagawa 224-8539 (JP); IINO, Satoshi Panasonic Mobile Communications Co.,Ltd, Kanagawa 224-8539 (JP); TAKEI, Yoshihiko Panasonic Mobile Communications Co.,Ltd, Kanagawa 224-8539 (JP)
(74) Representative: Zimmer, Franz-Josef
(86) International application number: PCT/JP2006/313253
(87) International publication number: WO 2007/004625

(57) **Abstract**

A personal network management method wherein if an access request is received from a communication terminal exterior to a personal network and the association of communication terminal information of the access request with the corresponding terminal in the personal network has not been registered yet, then the registration as to whether the connection to the communication terminal is permissible can be dynamically performed, and wherein the procedure of a registration from a communication terminal exterior to a personal network is facilitated, and an access into the personal network also can be performed. In a network system (1) according to this method, after a request of access to a mobile terminal (10) in a personal network (40) is transmitted from a mobile terminal (12) exterior to the personal network, a mobile terminal, which receives the access request, extracts information required for connection permission, and then transmits a connection permission registration request to a mobile network management apparatus (20) . The mobile networkmanagementapparatus (20) additionally registers, based on the information received together with the connection permission registration request and received information, connection permission information with a database that manages the connections of the mobile terminals in the personal network.

## Description

### Technical Field

The present invention relates to a personal network management method and a personal network management apparatus. More particularly, the present invention relates to a personal network management method and personal network management apparatus managing access to communication terminal apparatus in a personal network.

### Background Art

A network service is proposed where a plurality of communication equipment is grouped together on a network and this grouped plurality of communication equipment is managed and administered by a management server on the network. With this service, identification information etc. for a plurality of communication terminals connected to the network is registered in the management server by a communication terminal user so that communication is possible between fellow communication terminals in the registered group. In this way, a network configuration constituting a network utilizing a plurality of communication equipment such as mobile telephones etc. an individual user is in possession of, referred to as a PN (Personal Network) is noted as a service configuration utilizing a network. Investigation of technology relating to PN by 3GPP (3rd Generation Partnership Project) is far advanced (refer to non-patent document 1).

Further, it is also assumed that not only public networks such as telephone networks etc. but also networks such as LANs and the Internet etc. are utilized, and that a plurality of terminals connected to a plurality of different types of networks are grouped together.

For example, personal communication trace connection methods such as disclosed in patent document 1 exist as technology relating to PN's for grouping a plurality of communication terminals connected to a plurality of different types of network. In this method, a personal communication number corresponding to a person is assigned, a user specifies connection destination terminals over a plurality of networks at their own personal communication number, and the mobile terminal is managed over a plurality of networks with this position information. The user can then specify arbitrary communication terminals in a plurality of networks by specifying the personal communication number.
Patent Document 1: Japanese Patent Application Laid-Open No.Hei.5-145963.
Non-patent Document 1: TSG S#27(05)0386 "New WI for Personal Network(PN) and Personal Area Network(PAN)" 3GPP.

### Disclosure of Invention

### Problems to be Solved by the Invention

However, with personal network services where research by 3GPP is advanced (non-patent document 1), research has only been carried out into communication between fellow communication terminals in a personal network, i.e.communication betweenfellowcommunication terminals in a personal network constituted by a plurality of communication terminals in the possession of the same user.

Further, it is necessary for terminals in the personal network to be known in advance in order to connect communication terminal users outside the personal network to inside the personal network. Moreover, with personal networks of the related art, registration of a plurality of utilized communication terminals with networks is such that the user accesses a management server to register in advance, and there is the problem that this registration processing is annoying for the user.

Moreover, in order to implement information with limited access from outside with respect to the communication terminal in the personal network, it is necessary for the administrator of the personal network to add and change settings of access limiting information for every communication terminal in each individual personal network, with the operation of adding and changing settings also being troublesome.

Further, with the aforementioned patent document 1, while a user is designating a terminal for a connection destination using their own personal communication number across a plurality of networks, it is necessary to register identification information etc. for connection destination terminals in advance on the network side, and the registration procedure for designating the connection destination terminals is also troublesome.

It is therefore an object of the present invention to provide a personal network management method and personal network management apparatus capable of dynamically carrying out registration processing as to whether or not connection to a communication terminal in a personal network is possible upon an access request from a communication terminal outside a personal network, in the event that association of this communication terminal information with the terminal in the personal network is not yet registered.

### Means for Solving the Problem

The personal network management method of the present invention is a personal network management method managing a personal network comprising a plurality of communication terminal apparatus connected to a network, comprised of a terminal connection management step managing registration of communication terminal information for a connection destination in a terminal connection management memory every communication terminal apparatus constituting the personal network, a receiving step receiving connection requests from communication terminal apparatus outside the personal network to communication terminal apparatus in the personal network, a search process of extracting connection source communication terminal information and connection destination communication terminal information from the received connection request, and search connection source communication terminal information from the terminal connection management memory, a registration step of associating and registering in the terminal connection management memory communication terminal information in the personal network and communication terminal information for the connection source if association of communication terminal information in the personal network and communication terminal information of the connection source is associated in the terminal connection management memory at the network the communication terminal apparatus belongs to in the personal network.

Further, the personal network management apparatus of the present invention is a personal network management apparatus managing a personal network comprising a plurality of communication terminal apparatus connected to a network, comprising a terminal connection management section managing registration of communication terminal information for a connection destination every communication terminal apparatus constituting the personal network, a receiving section receiving connection requests from communication terminal apparatus outside the personal network to communication terminal apparatus in the personal network, a search section extracting connection source communication terminal information and connection destination communication terminal information from the received connection request, and search connection source communication terminal information from the terminal connection management section, and a registration section associating and registering in the terminal connection management section communication terminal information in the personal network and communication terminal information for the connection source if association of communication terminal information in the personal network and communication terminal information of the connection source is associated in the terminal connection management section at the network the communication terminal belongs to in the personal network.

### Advantageous Effect of the Invention

According to the present invention, upon an access request from a communication terminal outside a personal network, in the event that association of this communication terminal information with a terminal in the personal network is not yet registered, it is possible to dynamically carry out registration processing as to whether or not connection to the communication terminal inside the personal network is possible, a registration procedure from a communication terminal outside the personal network is straightforward, and access to inside the personal network is possible. Further, by utilizing an authentication function (terminal validity) certified by the operator or encryption (security) of a channel, complex processing using electronic certificates etc. is reduced and processing can be carried out securely.

### Brief Description of the Drawings

FIG. 1 is a view showing a system configuration for a network system of Embodiment 1 of the present invention;
FIG.2 is a block diagram showing an outline configuration for mobile network management apparatus of Embodiment 1 of the present invention;
FIG.3 is a view showing an example of a terminal connection management database of Embodiment 1 of the present invention;
FIG.4 is a view showing an example of a terminal attribute management database of Embodiment 1 of the present invention;
FIG.5 is a ladder chart showing the operation in the case of an access to a mobile terminal in a personal network from a mobile terminal outside the personal network of Embodiment 1 of the present invention;
FIG.6 is a flowchart showing database search processing executed at mobile network management apparatus of Embodiment 1 of the present invention;
FIG.7 is a flowchart showing connection permit registration processing executed by mobile network management apparatus of Embodiment 1 of the present invention;
FIG.8 is a view showing an example of a terminal connection management database after connection permit registration processing of Embodiment 1 of the present invention;
FIG.9 is a ladder chart showing operation upon a connection permission deletion request of Embodiment 1 of the present invention;
FIG.10 is a flowchart showing connection permit deletion processing executed by mobile network management apparatus of Embodiment 1 of the present invention;
FIG.11 is a view showing a system configuration for a network system of Embodiment 2 of the present invention;
FIG.12 is a flowchart showing database search processing executed at mobile network management apparatus of Embodiment 2 of the present invention;
FIG.13 is a flowchart showing connection permit registration processing executed by mobile network management apparatus of Embodiment 2 of the present invention;
FIG.14 is a view showing the configuration of each company DB before registration of information permitting connection according to Embodiment 2 of the present invention;
FIG.15 is a view showing the configuration of each company DB after connection permit registration processing according to Embodiment 2 of the present invention;
FIG.16 is a flowchart showing connection permit deletion processing executed by mobile network management apparatus of Embodiment 2 of the present invention;
FIG.17 is a ladder chart showing the operation upon an access request between each mobile terminal and each mobile/fixed terminal inside and outside a personal network of Embodiment 2 of the present invention;
FIG.18 is a view showing an example of a terminal connection management database and terminal attribute management database according to Embodiment 1 of the present invention;
FIG.19 is a view showing an example of a terminal connection management database after connection permit registration processing of Embodiment 2 of the present invention;
FIG.20 is a ladder chart showing the operation in the case of an access to a mobile terminal in a personal network from a mobile terminal outside the personal network of Embodiment 2 of the present invention;
FIG.21 is a block diagram showing an outline configuration for mobile network management apparatus of Embodiment 3 of the present invention of the present invention;
FIG.22 is a view showing an example of a group management database of Embodiment 3 of the present invention;
FIG.23 is a ladder chart showing operation upon a group registration request of Embodiment 3 of the present invention;
FIG.24 is a flowchart showing group registration processing executed by mobile network management apparatus of Embodiment 3 of the present invention;
FIG.25 is a ladder chart showing operation upon a group deletion request of Embodiment 3 of the present invention;
FIG.26 is a flowchart showing group deletion processing executed by mobile network management apparatus of Embodiment 3 of the present invention; and
FIG.27 is a view showing a system configuration for a network system of Embodiment 4 of the present invention.

### Best Mode for Carrying Out the Invention

The following is a detailed description with reference to the drawings of preferred embodiments of the present invention.

In the embodiments below, the cases of operator-managed networks and particularly mobile networks where strong security is provided in a channel is shown for the network but application is also possible to other operator-managed networks than mobile networks.

### (Embodiment 1)

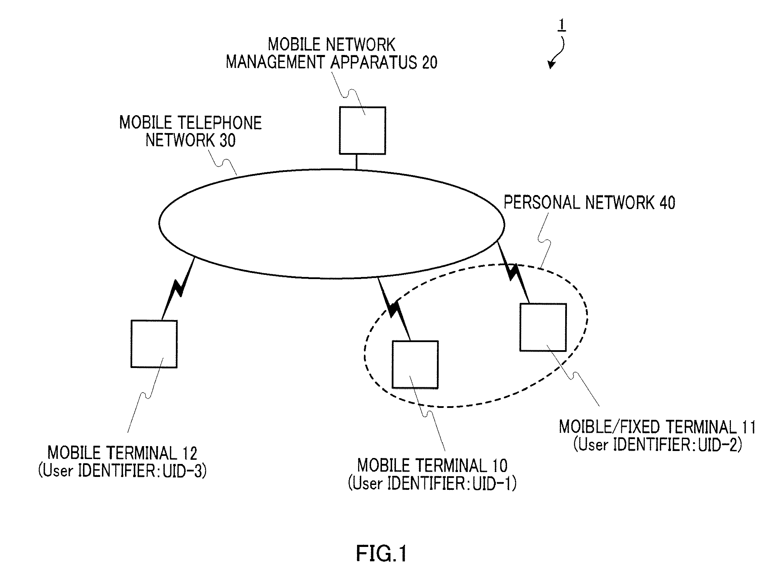

FIG.1 shows a system configuration for a network system applied to Embodiment 1. In FIG. 1, network system 1 is comprised of mobile terminal 10 and mobile/fixed terminal 11 belonging to personal network 40 connected to a mobile network 30, mobile terminal 12 that does not belong to personal network 40, and mobile network management apparatus 20.

As shown in FIG.1, "UID-1" is set as a user identifier in mobile terminal 10, "UID-2" is set as a user identifier in mobile/fixed terminal 11, and "UID-3" is set as a user identifier in mobile terminal 12. USIM information etc. issued by the operator to uniquely identify users and identify contractors in a mobile telephone system, may be given as an example of user identifiers. This user identifier is not limited to being issued by the operator, and operator may include a contractor or information identifying the terminal.

A case is shown here where, with the network system 1 of FIG. 1, three items of mobile terminal 10, mobile/fixed terminal 11 and mobile terminal 12 are connected but the number of items connected is not particularly limited.

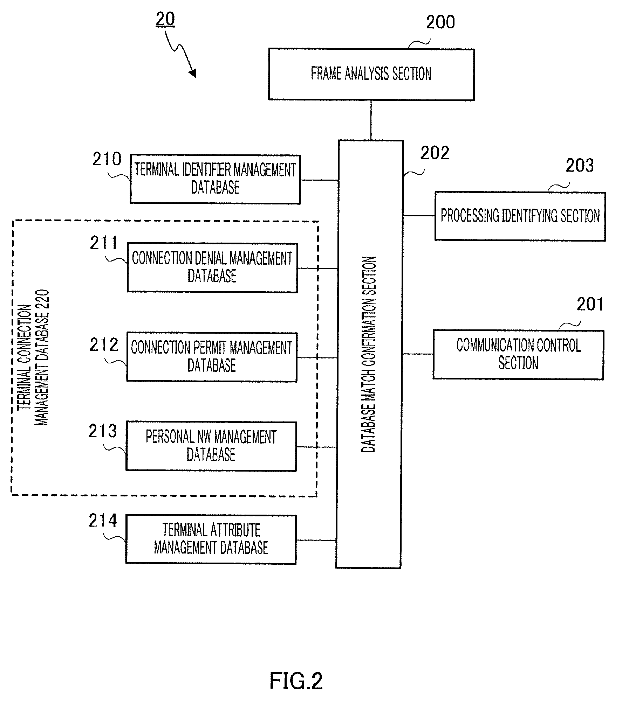

FIG.2 is a block diagram showing an outline configuration of mobile network management apparatus 20. In FIG.2, mobile network management apparatus 20 is constructed from frame analysis section 200, communication control section 201, database (DB) match confirmation section 202, process determining section 203, terminal identifier management database (DB) 210, connection denial management database (DB) 211, connection permit management database (DB) 212, personal network (NW) management database (DB) 213, and terminal attribute management database (DB) 214. Connection denial management DB 211, connection permit management DB 212, and personal NW management DB 213 constitute a terminal connection management database (DB) 220.

Communication control section 201 has a communication I/F function connecting with mobile network 30 and executes communication procedures between mobile terminal 10, mobile/fixed terminal 11 and mobile terminal 12, according to call requests and data communication requests.

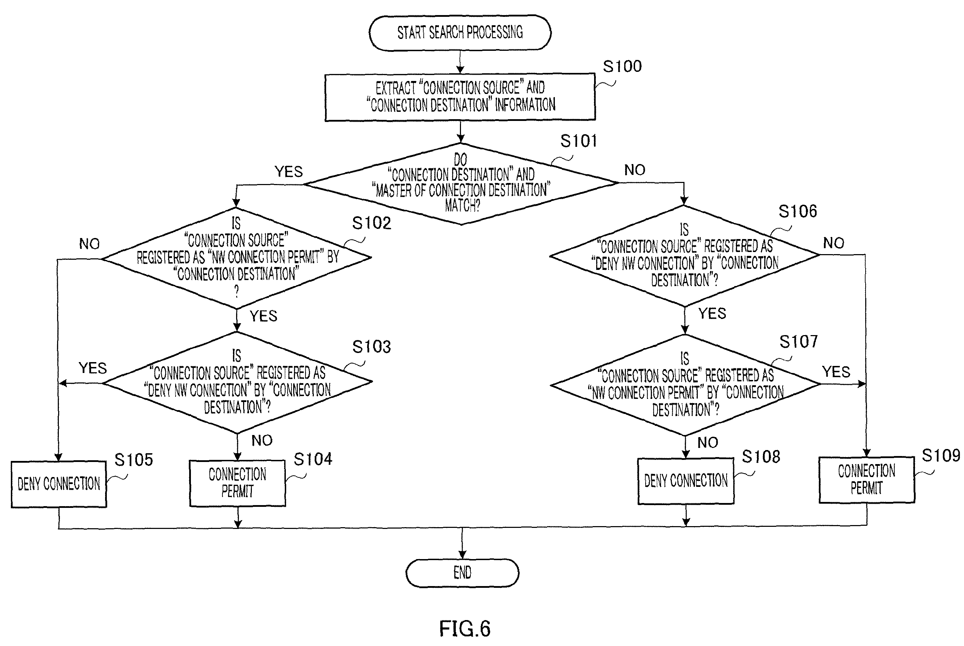

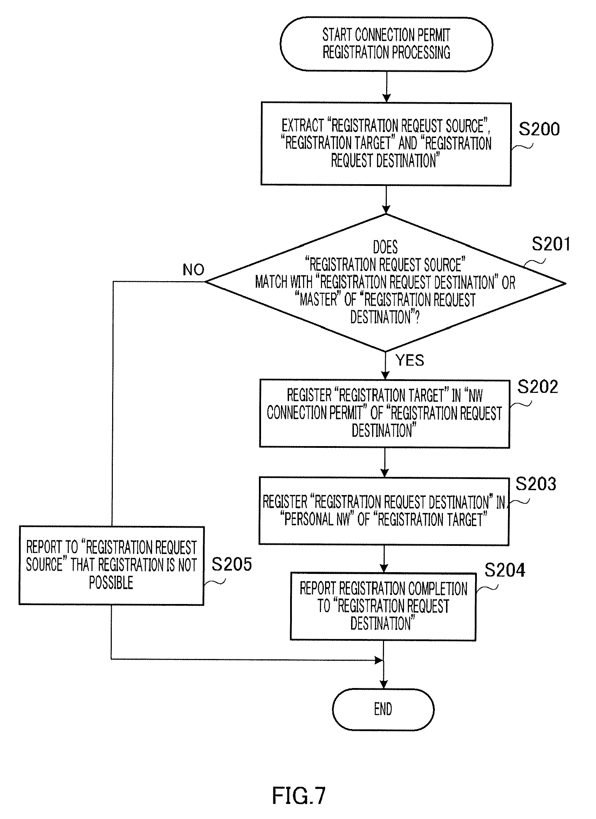

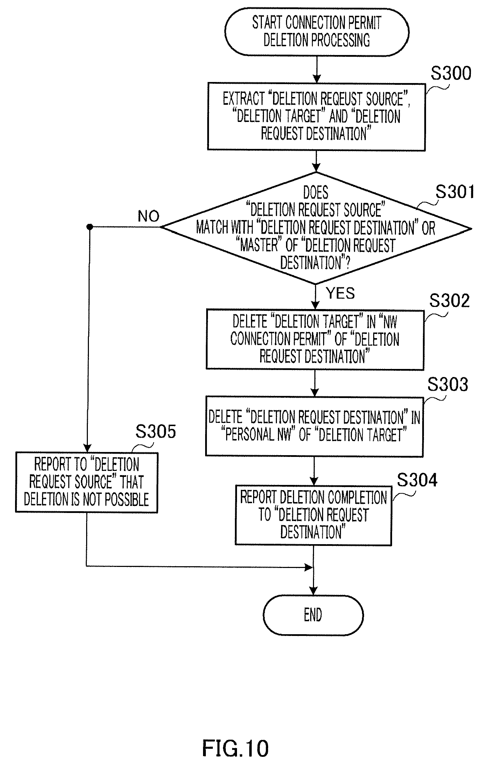

DB match confirmation section 202 determines processes corresponding to each request received from mobile terminal 12 via communication control section 201 using process determining section 203, extracts each item of information necessary in the processes using frame analysis section 200, compares each item of extracted information and information stored in terminal identifier management DB 210, terminal connection management DB 220, and terminal attribute management DB 214, and executes database search processing (see FIG. 6), connection permit registration processing (see FIG. 7) and connection permit deletion processing (see FIG.10) described later.

Frame analysis section 200 analyses the frame structure of each request inputted from DB match confirmation section 202, extracts each item of information necessary for processing, and outputs each item of information for a connection destination and a connection source to DB match confirmation section 202.

Terminal identifier management DB 210 is a database for managing user identifiers "UID-1", "UID-2", "UID-3" shown in FIG. 1 as the terminal identifiers for mobile terminal 10, mobile/fixed terminal 11 and mobile terminal 12 connected to mobile network 30, respectively.

Connection denial management DB 211 is a database for managing information (for example, "NULL: no setting" and "ALL: all connections denied" etc) denying network connections to each of mobile terminal 10, mobile/fixed terminal 11 and mobile terminal 12 connected to mobile network 30.

Connection permit management DB 212 is a database for managing information (for example, "ALL: all connectionspermitted"andspecificuseridentifiersetc) permitting network connections to each of mobile terminal 10, mobile/fixed terminal 11 and mobile terminal 12 connected to mobile network 30.

Personal NW management DB 213 is a database managing information for other terminals belonging to a personal network every mobile terminal 10, mobile/fixed terminal 11, and mobile terminal 12 connected to mobile network 30.

Terminal attribute management DB 214 is a database managing terminal attribute information (user identifier, administrator information: master) for each of mobile terminal 10, mobile/fixed terminal 11, and mobile terminal 12 connected to mobile network 30. In this Embodiment, a description is given of a method for managing administrator information using a database but administrator information may also be contained in the user identifier.

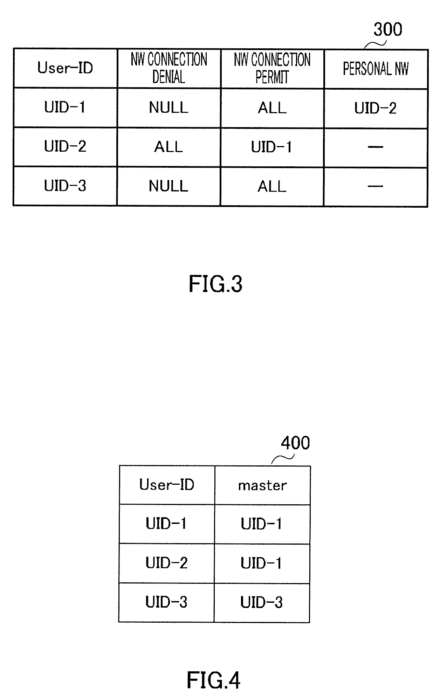

An example of terminal connection management DB 220 configured from connection denial management DB 211, connection permit management DB 212, and personal NW management DB 213 is shown in FIG.3. A "deny NW connection" column, "NW connection permit" column and "personal NW" column are provided in this terminal connection management DB 20 in association with each of the user identifiers "User-ID" for mobile terminal 10, mobile/fixed terminal 11, and mobile terminal 12.

In this example, "NW connection denial: NULL", "NW connection permission: ALL", and"personal NW:UID-2" are recorded in "UID-1, " which represents mobile terminal 10. That is, this example shows that mobile terminal 10 permits network connections from all terminals and shows that mobile/fixed terminal 11 belongs to personal network 40 the terminal belongs to.

Further, "NW connection denial: ALL" and "NW connection permission: UID-1" are registered in "UID-2, " which represents mobile/fixed terminal 11. Namely, it is shown that mobile/fixed terminal 11 only permits connection with mobile terminal 10 and denies network connections from other terminals. Here, the supposed mobile/fixed terminal 11 (for example, mobile/fixed terminal 11) is a management terminal etc. for a home NW managed by the user in possession of mobile terminal 10. In the home NW, it is preferable to deny connections other than from the administrator for security.

Further, "NW connection denial: NULL" and "NW connection permission: ALL" are registered in "UID-3" which represents mobile terminal 12. That is, this example shows that mobile terminal 12 shows that network connection from all terminals is possible.

An example of terminal attribute management DB 214 is shown in FIG.4. A "master" column indicating an administrator is provided in this terminal attribute management DB 214 in association with each of the user identifiers "User-ID" columns for mobile terminal 10, mobile/fixed terminal 11, and mobile terminal 12. This example shows that the administrator of "UID-1" which represents mobile terminal 10 is its user him/herself, the administrator of "UID-2" which represents mobile/fixed terminal 11 is "UID-1", and the administrator of "UID-3," which represents mobile terminal 12 is its userhim/herself. If the administrator is registered, modification and addition of content registered in terminal connection management DB 220 and terminal attribute management DB 214 shown in FIG.3 and FIG.4 is possible even if the user is not the user him/herself.

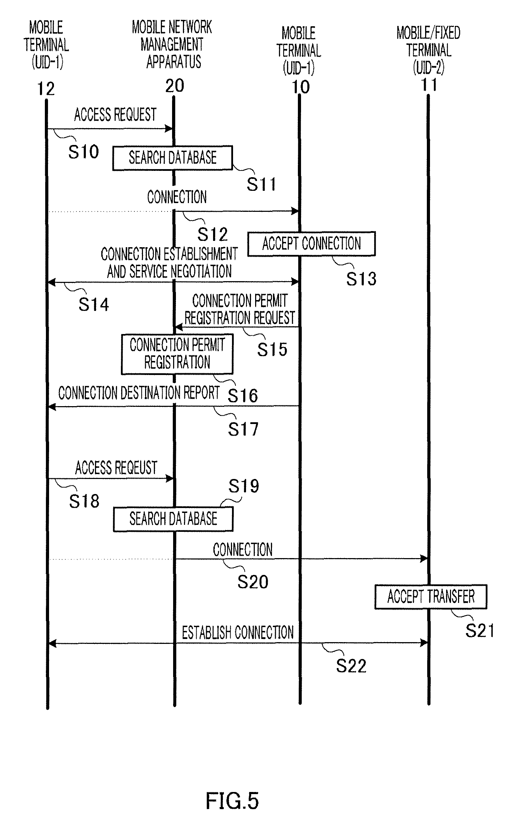

Next, with the network system 1 of FIG.1, a description is given with reference to the ladder chart shown in FIG.5 of the operation in the case of mobile terminal 12 accessing mobile terminal 10 with personal network 40.

In FIG.5, when an access request to mobile terminal 10 is transmitted from mobile terminal 12 to mobile network management apparatus 20 via mobile network 30 (S10), mobile network management apparatus 20 senses that the request received by process determining section 203 is an access request, and executes database search processing (S11).

The details of this database search processing are now described with reference to the flowchart shown in FIG.6.

In FIG.6, DB match confirmation section 202 and frame analysis section 200 in mobile network management apparatus 20 sensing that the request is an access request, subject the access request to frame analysis and extract each item of information "UID-1" and "UID-3" for the connection destination and the connection source (step S100). Next, DB match confirmation section 202 searches terminal attribute management DB 214 shown in FIG.4 to determine whether the connection destination and the connection destination "master" match, based on each item of information for the extracted connection destination and connection source (step S101).

In this event, the administrator of mobile terminal 10 "UID-1" of the connection destination is "UID-1" and the administrator matches.

Consequently, DB match confirmation section 202 determines whether or not the connection destination and the connection destination "master" match (step S101: YES), step S102 is gone to, and whether "NW connection permit" is registered for mobile terminal 12 "UID-3" that is the connection source by mobile terminal 10 "UID-1" that is the connection destination is confirmed by terminal connection management DB 220 of FIG.3.

In terminal connection management DB 220 of FIG.3, NW connection permit (ALL) is registered in mobile terminal 10 "UID-1" and network connection is allowed from all terminals. Consequently, DB match confirmation section 202 determines that mobile terminal 10 "UID-1" allows connection from mobile terminal 12 "UID-3" (step S102: YES), and step S103 is proceeded to.

In step S103, DB match confirmation section 202 confirms whether or not "NW connection denial" is registered by mobile terminal 10 "UID-1" that is the connection destination for mobile terminal 12 "UID-3" that is the connection source by means of terminal connection management DB 220 of FIG.3. "NW connection denial (NULL) is registered in mobile terminal 10 "UID-1" and connection from mobile terminal 12 "UID-3" is not denied. Consequently, DB match confirmation section 202 determines that connection denial from mobile terminal 12 "UID-3" is not set in mobile terminal 10 "UID-1" (step S103: NO) and permits connection from mobile terminal 12 to mobile terminal 10 (step S104), and this process is complete.

Further, in the event that connection permission is not registered by the connection destination for the connection source in step S102 (step S102: NO), and, further, in the event that connection denial is not registered by the connection destination for the connection source (step S103: YES) in step S103, DB match confirmation section 202 denies connection from mobile terminal 12 to mobile terminal 10 is denied (step S105), and this process is complete.

Further, in the event that the connection destination and the administrator of the connection destination do not match in step S101, for example, in the event that the terminal for the connection destination is a home NW and a terminal managing the home NW exists separately (step S101: NO), step S106 is proceeded to, and DB match confirmation section 202 confirms whether connection denial of the connection source is registered by the connection destination by means of terminal connection management DB 220 of FIG.3. In the event that connection denial is registered (step S106: YES), DBmatch confirmation section 202 confirms whether connection permit is registered by the connection destination for the connection source by means of terminal connection management DB 220 of FIG.3 (step S107).

In the event that connection permit is not set (step S107: NO), DB match confirmation section 202 denies connection from the connection source to the connection destination (step S108), and this process is complete. Further, in step S106, in the event that connection denial is not registered by the connection destination for the connection source (step S106: NO), and, further, in the event that connection permission is registered by the connection destination for the connection source in step S107 (step S107: YES), connection from the connection source to the connection destination is permitted (step S109), and this process is complete.

As a result of the above database search processing, mobile network management apparatus 20 permits connection from mobile terminal 12 to mobile terminal 10 and a channel is connected frommobile terminal 12 to mobile terminal 10 in FIG.5 (S12). When transfer by mobile network management apparatus 20 is accepted (S13), mobile terminal 10 establishes a connection with mobile terminal 12 (S14).

Next, a connection permit registration request set with registration request source "UID-1", registration target "UID-3" and registration request destination "UID-2," is sent from mobile terminal 10 to mobile network management apparatus 20 (S15). When it is detected in mobile network management apparatus 20 that the request received by process determining section 203 is a connection permit registration request, connection permit registration processing is executed (S16).

The details of this connection permit registration processing are now described with reference to the flowchart shown in FIG.7.

In FIG.7, DB match confirmation section 202 and frame analysis section 200 in mobile network management apparatus 20, sensing that the request is a connection permit registration request, analyze the frame of the connection permit registration request and extract registration request source"UID-1", registration target "UID-3" and registration request destination "UID-2" (step S200). Next, DB match confirmation section 202 determines whether or not registration request source "UID-1" matches with registration request destination "UID-2" or the master of registration request destination "UID-2," by means of terminal attribute management DB 214 of FIG.4 (step S201).

In the terminal attribute management DB 214 of FIG.4, "UID-1 is registered as the "master" for registration request source "UID-1" and registration request destination "UID-2." Consequently, DB match confirmation section 202 determines that registration request source "UID-1" matches with "master: UID-1" of registration request destination "UID-2" (step S201: YES), and registers target "UID-3" in "NW connection permit" of registration request destination "UID-2" of terminal connection management DB 220 of FIG.3 (step S202). Next, DB match confirmation section 202 registers registration request destination "UID-2" in "personal NW" of registration target "UID-3" (step S203).

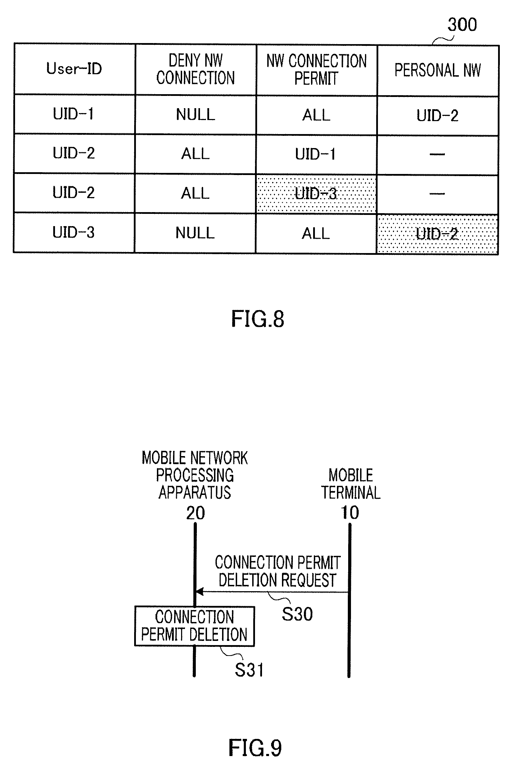

Registration content shown in FIG. 8 is then added to terminal connection management DB 220 by the registration processes of step S202 to step S203.

Next, DB match confirmation section 202 gives report of registration completion to registration request source "UID-1" from communication control section 201 (step S204), and this process is complete. Further, in the event that it is determined in step S201 that the registration request source does not match with the registration request destination or the "master" of the registration request destination (step S201: NO), DE match conformation section 202 reports that registration is not possible from communication control section 201 to registration request source "UID-1" (step S205), and this process is complete.

Next, returning to FIG.5, when report of completion of registration is received from mobile network management apparatus 20, mobile terminal 10 sends connection destination report set in the user identifier "UID-2" for mobile/fixed terminal 11 as the connection destination to mobile terminal 12 (S17). An example is shown for a method for mobile terminal 10 to report the connection destination as S17, but it is also possible to accordingly carry out connection destination report to mobile terminal 12 in a corresponding manner while mobile network management apparatus 20 reports registration completion to mobile terminal 10. When connection destination report is received, mobile terminal 12 sends an access request set with this connection destination "UID-2" to mobile network management apparatus 20 (S18).

Upon receiving the access request from mobile terminal 12, mobile network management apparatus 20 executes database search processing in the same way as described above in S11 (S19). At this time, in terminal attribute management DB 214 in mobile network management apparatus 20, "UID-3" is already registered in "NW connection permit" of connection destination "UID-2" as a result of connection permit registration processing described above and processing for connecting a channel from mobile terminal 12 to mobile/fixed terminal 11 is executed (S20).

When transfer by mobile network management apparatus 20 is accepted (S21), mobile/fixed terminal 11 establishes a connection with mobile terminal 12 (S22).

As shown above, upon an access request to mobile terminal 10 in personal network 40 from mobile terminal 12 outside personal network 40, information for "NW connection permit" of mobile/fixed terminal 11 and "personal NW" of mobile terminal 12 is additionally registered to terminal attribute management DB 214 in mobile network management apparatus 20.

Next, a description is given with reference to the ladder chart shown in FIG.9 and the flowchart shown in FIG.10 of connection permission deletion processing executed in mobile terminal 10.

In FIG.9, when a connection permission deletion request set with deletion request source "UID-1", deletion request destination"UID-2" and deletion target "UID-3" is sent from mobile terminal 10 to mobile network management apparatus 20 (S30), at mobile network management apparatus 20, after this request is sensed to be a connection permission deletion request by process determining section 203, connection permission deletion processing is executed (S31).

In FIG.10, DB match confirmation section 202 and frame analysis section 200 in mobile network management apparatus 20 analyze the frame of the connection permission deletion request and extract deletion request source "UID-1", deletion request destination "UID-2", and deletion target "UID-3" (step S300). Next, DB match confirmation section 202 determines whether or not deletion request source "UID-1" matches with deletion request destination "UID-2" or the master of deletion request destination "UID-2" by means of terminal attribute management DB 214 of FIG.4 (step S301).

In terminal attribute management DB 214 of FIG.4, "UID-1" is registered as the "master" for deletion request source "UID-1"' and deletion request destination "UID-2." Consequently, DB match confirmation section 202 determines that deletion request source "UID-1" matches with "master: UID-1" of deletion request destination "UID-2" (step S301: YES), and deletes deletion target "UID-3" of "NW connection permit" of deletion request destination "UID-2" of terminal connection management DB 220 of FIG.3 (step S302).

Next, DB match confirmation section 202 deletes "personal NW: UID-2" of deletion target "UID-3" of terminal connection management DB 220 of FIG.3 (step S303), gives report of completion of deletion to deletion request source "UID-1" from communication control section 201 (step S304), and this process is complete.

Further, in the event that it is determined that deletion request source "UID-1" does not match with deletion request destination "UID-2" or "master" of deletion request destination "UID-2" (step S301: NO), DB match confirmation section 202 reports that deletion is not possible at deletion request source "UID-1" from communication control section 201 (step S305), and this process is complete.

As described above, with the network system of Embodiment 1, in the event that an access request is sent from a mobile terminal outside a personal network to a terminal in the personal network, the terminal receiving the access request extracts information necessary to to permit connection and sends a connection permit registration request to the mobile network management apparatus, and the mobile network management apparatus then additionally registers connection permit information to the database managing the connection destinations of the terminal in the personal network based on information received with the connection permit registration request.

Therefore, upon an access request from the communication terminal outside a personal network, in the event that association with a terminal in the personal network for this communication terminal information is not yet registered, it is possible to dynamically carry out registration processing as to whether or not connection to a communication terminal is possible, a registration procedure from a communication terminal outside the personal network is straightforward, and access to in the personal network is possible.

### (Embodiment 2)

In Embodiment 1 described above, a description is given for a case where a personal network is configured with mobile terminals connected to a single mobile network 30 is used as a network system, but, with Embodiment 2, a description will be given of a case of a network system where a personal network is configured with mobile terminals connected to mobile networks of a number of different companies.

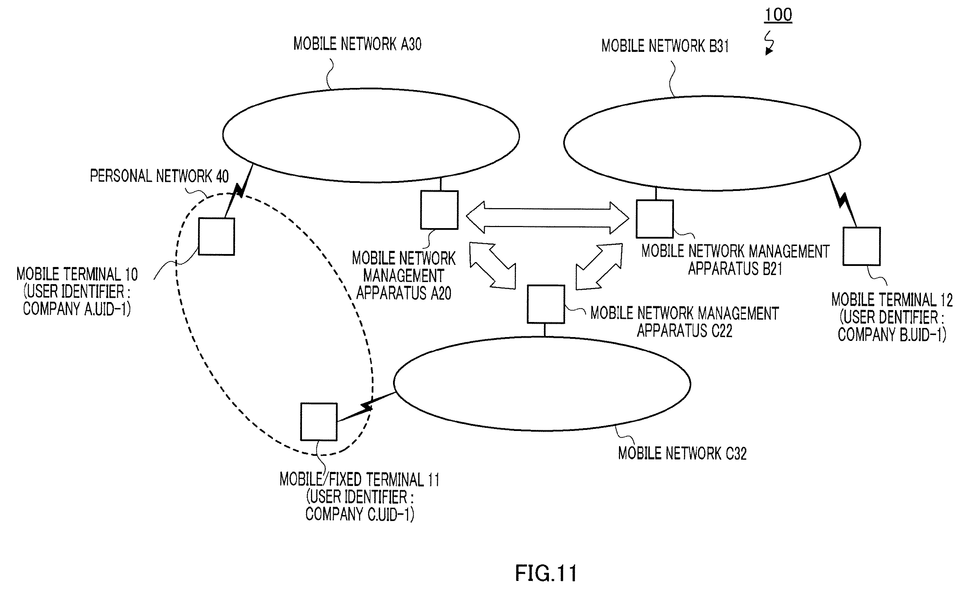

FIG.11 shows a system configuration for a network system to which Embodiment 2 is applied. In FIG.11, network system 100 is such that mobile network A30 of carrier company A (hereinafter simply "company A"), mobile network B31 of carrier company B (hereinafter simply "company B"), and mobile network C32 of carrier company C (hereinafter referred to as "company C") are made to mutually cooperate with mobile network management apparatus A20, mobile network management apparatus B21 and mobile network management apparatus C22 connected to mobile networks A30, B31 and C32, respectively. Further, mobile terminal 10 is connected to mobile network A30, mobile/fixed terminal 11 is connected to mobile network B31, and mobile terminal 12 is connected to mobile network C32. Moreover, mobile terminal 10 and mobile/fixed terminal 11 constitute personal network 40 in network system 100 of FIG.11.

A user identifier "company A UID-1" assigning a unique ID to the terminal user from company A is set in mobile terminal 10, user identifier "company C UID-1" assigning a uniquely assigned to the terminal user from company C is set in mobile/fixed terminal 11, and a user identifier "company B UID-1" uniquely assigned to the terminal user from company B is set in mobile terminal 12.

The configurations for mobile network management apparatus A20, B21 AND C22 of Embodiment 2 are the same as for mobile network management apparatus 20 shown in FIG.2 of Embodiment 1, and so their illustrations and explanations will be omitted. Further, DB's of the same configuration as terminal connection management DB 220 and terminal attribute management DB 214 shown in FIG.3 and FIG.4 of Embodiment 1 described above is stored in mobile network management apparatus A20, B21 and C22.

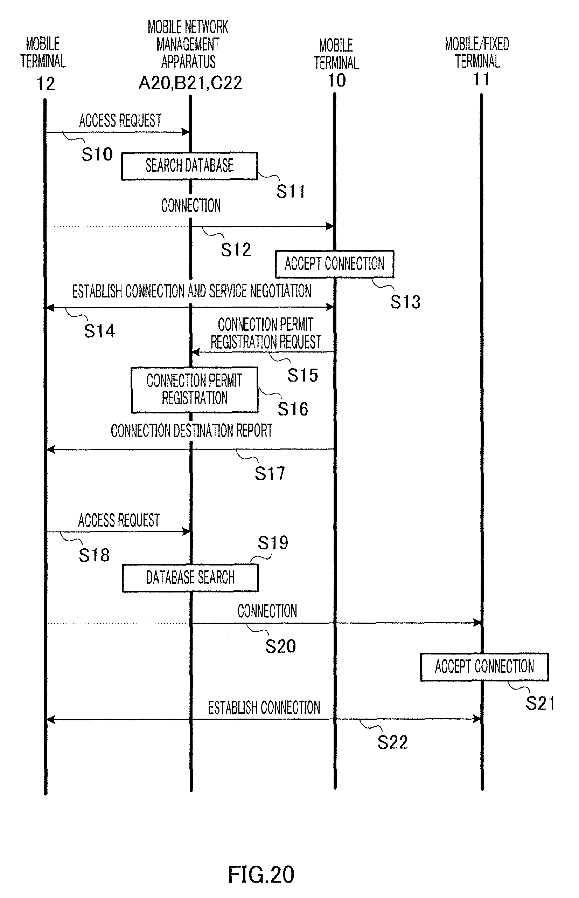

In the following, processing for a case where an access request is sent from mobile terminal 12 to mobile terminal 10 will be described using the ladder chart of FIG.20. The processing shown in FIG.20 is analogous with FIG.5, and a description is given centering on portions that differ for processing.

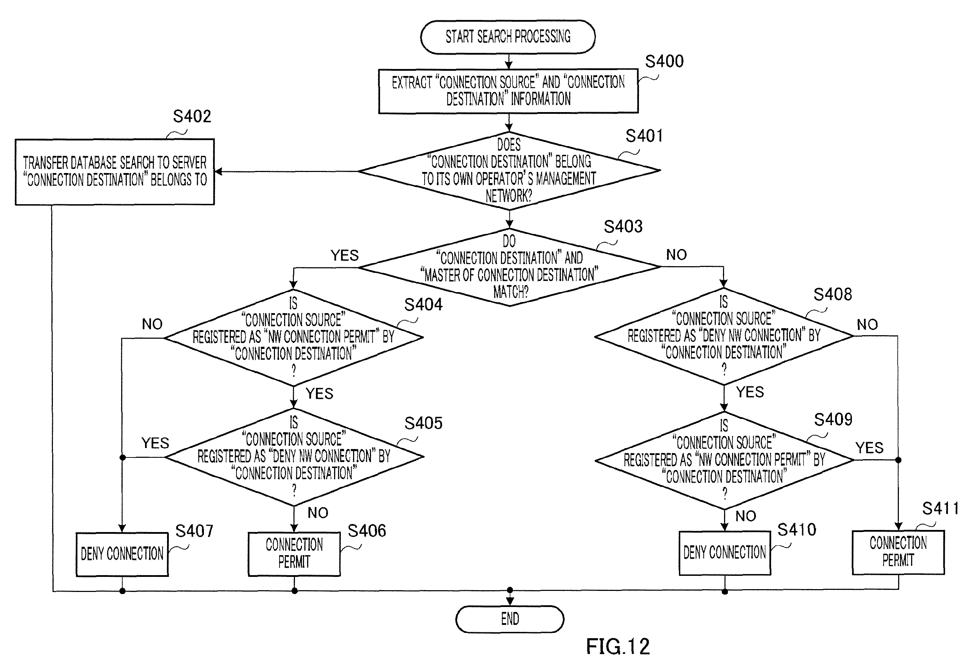

First, mobile terminal 12 makes an access request to its own operator' s mobile network management apparatus B21 (S10) and mobile network management apparatus B21 executes database search processing using the received access request. This database search processing are now described with reference to the flowchart shown in FIG.12.

In FIG.12, in cooperation with process determining section 203, DB match confirmation section 202 and frame analysis section 200 in mobile network management apparatus B21 sensing that the request is an access request carry out frame analysis for the access request and information for the connection destination "company A UID-1" and connection source "company B UID-1" is extracted (step S400). Next, DB match confirmation section 202 determines whether or not extracted connection destination "company A UID-1" is a mobile terminal registered in its own operator's management network, i.e. mobile network B31 (step S401). Here, the extracted connection destination "company A UID-1" is not a mobile terminal registered in mobile network B31 (step S401: NO). A database search request is therefore transferred to mobile network management apparatus A20 connection destination "company A UID-1" belongs to (step S402), and this process is complete.

Next, when the transferred database search request is received, mobile network management apparatus A20 extracts information for the connection destination "company A UID-1" and the connection source "company B UID-1" (step S400). After this, DB match confirmation section 202 determines whether or not extracted connection destination "company A UID-1" is a mobile terminal registered in its own operator's management network, i.e. mobile network A30, by searching terminal identifier management DB 210 (step S401). DB match confirmation section 202 then determines that the extracted connection destination "company A UID-1" is a mobile terminal registered in mobile network A30 (step S401: YES), and the processing of step S403 onwards is executed. Processing from step S403 to step S411 is the same as processing of step S101 to step S109 for FIG.6 described above in Embodiment 1 and description is therefore omitted.

Database search processing of FIG.12 above is executed in the same way at mobile network management apparatus A20, B21 and C22.

Returning to FIG.20, channel connection between mobile terminal 12 and mobile terminal 10 is carried out via mobile network management apparatus B21 and mobile network management apparatus A20 by the database search processing (S12). When connection from mobile network management apparatus A20 is accepted (S13), mobile terminal 10 establishes a connection with mobile terminal 12 (S14).

After this, whenaconnection permitregistration request set with registration request source "company A UID-1", registration target "company B UID-1" and registration request destination "company C UID-1" is sent from mobile terminal 10 to mobile network management apparatus A20, the following connection permit registration process is executed at mobile network management apparatus A20.

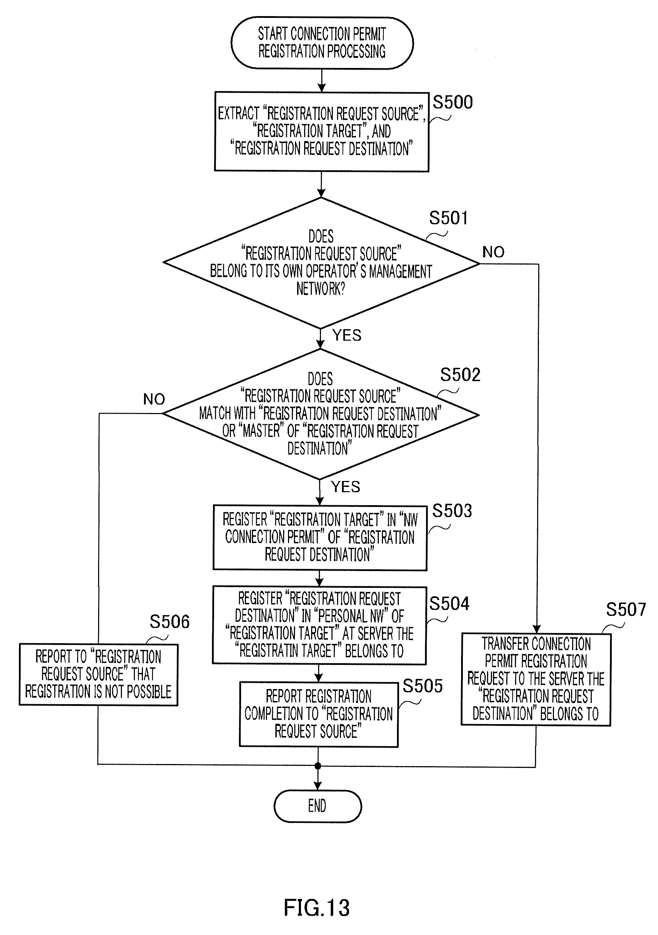

A description is now given with reference to the flowchart shown in FIG.13 of connection permit registration processing executed by mobile network management apparatus A20.

In FIG.13, in cooperation with process determining section 203, DB match confirmation section 202 and frame analysis section 200 in mobile network management apparatus A20 sensing the presence of an access request, analyze the frame of the connection permit registration request and extract registration request source "company A UID-1", registration target "company B UID-1" and registration request destination "company CUID-1" (step S500). Next, DBmatch confirmation section 202 determines whether or not registration request destination "company C UID-1" is a mobile terminal registered in its own operator's network, i.e. mobile network A30 (step S501). In the event that it is determined that the extracted registration request destination "company C UID-1" is not a mobile terminal registered in mobile network A30 (step S501: NO), DB match confirmation section 202 determines the carrier of the connection destination from the user identifier of the extracted connection destination, transfers the connection permit registration request to mobile network management apparatus C22 the connection destination belongs to (step S507), and this process is complete.

After this, mobile network management apparatus C22 extracts registration request source "company A UID-1", registration target "company B UID-1" and registration request destination "company C UID-1" (step S500), determines whether the extracted connection destination "company C UID-1" is a mobile terminal registered in mobile network C32 by means of DB match confirmation section 202 (step S501: YES), and executes processing from step S502 onwards. Processing from step S502 to step S506 is the same as processing of step S201 to step S205 of FIG.7 described above in Embodiment 1 and description is therefore omitted.

Connection permit processing of FIG.13 above is executed in the same way at mobile network management apparatus A20, B21 and C22.

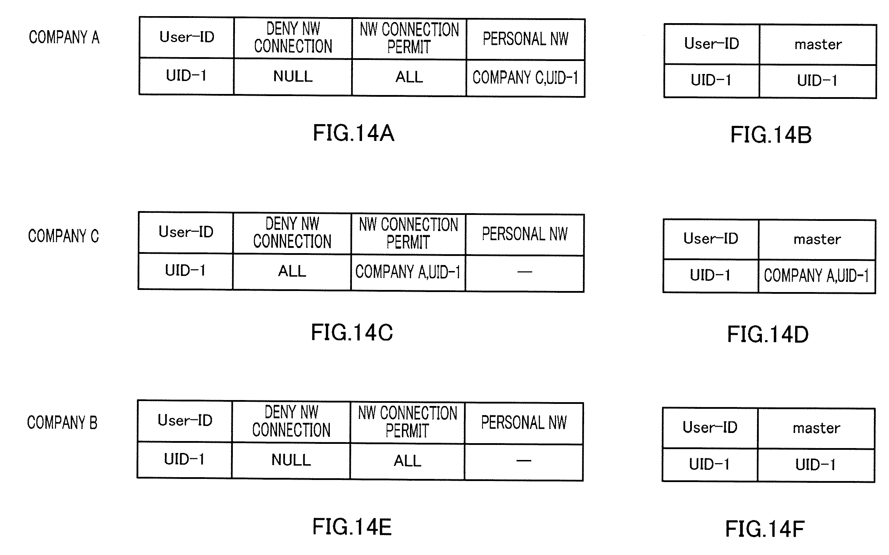

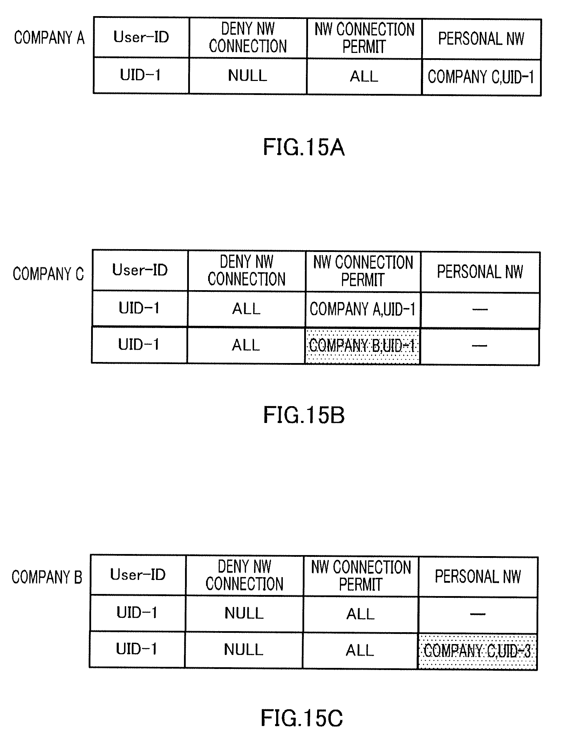

An example resulting from execution of the above connection permit registration processing where information permitting connection to each of the administered terminal connection management DB's is registered in mobile network management apparatus A20, mobile network management apparatus B21, and mobile network management apparatus C22 is described with reference to FIG.14 and FIG. 15.

FIG. 14 is a view showing the configuration of each company DB before registration of information permitting connection. In FIG.14, (a) and (b) are views showing an example of terminal connection management DB 500 and terminal attribute management DB 510 in mobile network management apparatus A20 of company A, (c) and (d) are views showing an example of terminal connection management DB 600 and terminal attribute management DB 610 in mobile network management apparatus B21 of company C, and (e) and (f) are views showing an example of terminal connection management DB 700 and terminal attribute management DB 710 in mobile network management apparatus C22 of company B.

Here, user identifier information "company C UID-1" of mobile/fixed terminal 11 under the management of mobile terminal 10 is already registered in column "personal NW" in terminal connection management DB 500. Further, user identifier information "company A UID-1" for mobile terminal 10 that is the administrator terminal of mobile/fixed terminal 11, is already registered in column "master" in terminal attribute management DB 610.

By executing the connection permit registration processing by means of terminal connection management DB's 500, 600 and 700 of FIG.14 and terminal attribute management DB's 510, 610 and 710, as shown in FIG. 15 (b), NW connection permit registration for registration target "company B UID-1" is additionally registered in terminal connection management DB 600 by means of mobile network management apparatus C22. Further, as shown in FIG. 15 (c), personal NW registration for registration request destination "company C UID-1"' is additionally registered in terminal connection management DB 700 by mobile network management apparatus B21.

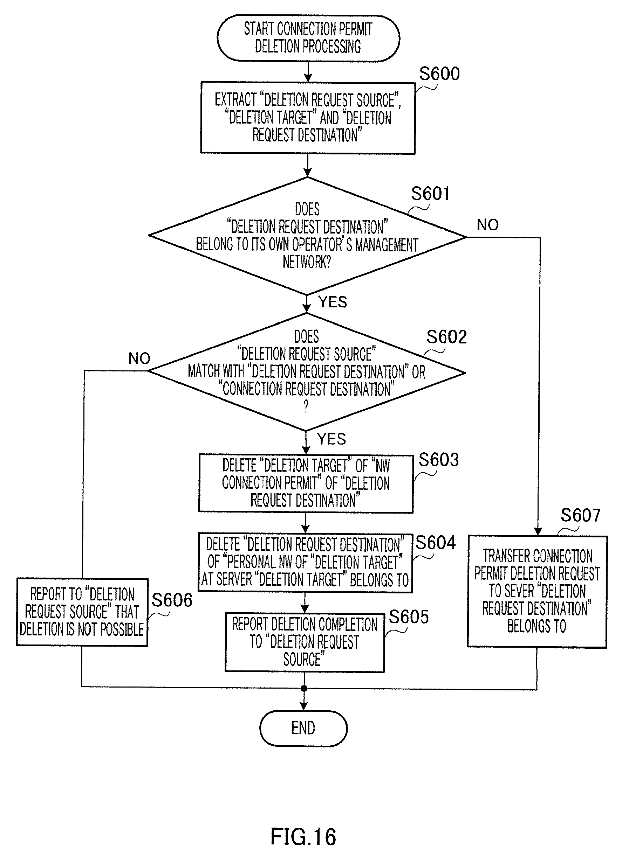

Next, processing for mobile terminal 10 "company A UID-1" to delete connection permission with respect to mobile/fixed terminal 11 "company C UID-1" of mobile terminal 12 "company B UID-1" is described with reference to the flowchart shown in FIG.16.

In FIG.16, in cooperation with process determining section 203, DB match confirmation section 202 and frame analysis section 200 in mobile network management apparatus 20A sensing the presence of a connection permit deletion request, analyze the frame of the connection permit deletion request and extract deletion request source "company A UID-1", deletion target "company B UID-1" and deletion request destination "company C UID-1" (step S600). After this, DB match confirmation section 202 determines whether or not extracted deletion request destination "company C UID-1" is a mobile terminal registered in its own operator's management network, i.e. mobile network A30, by searching terminal identifier management DB 500 (step S601). In the event that the extracted deletion request destination is a mobile terminal not registered in mobile network A30 (step S601: NO), DB match confirmation section 202 determines the carrier of the deletion request destination from the user identifier of the extracted deletion request destination and transfers the connection permit deletion request together with user identifier information for the extracted deletion request destination to mobile network management apparatus B21 or C22 the deletion request destination belongs to (step S607), and this process is complete.

Further, in the event that DB match confirmation section 202 determines that the extracted deletion request destination is a mobile terminal registered in its own mobile network A30 (step S601: YES), the process of step S602 onwards is executed. Processing from step S602 to step S606 is the same as processing of step S301 to step S305 for FIG.10 described above in Embodiment 1 and description is therefore omitted.

Connection deletion processing of FIG.16 above is executed in the same way in mobile network management apparatus A20, B21 and C22.

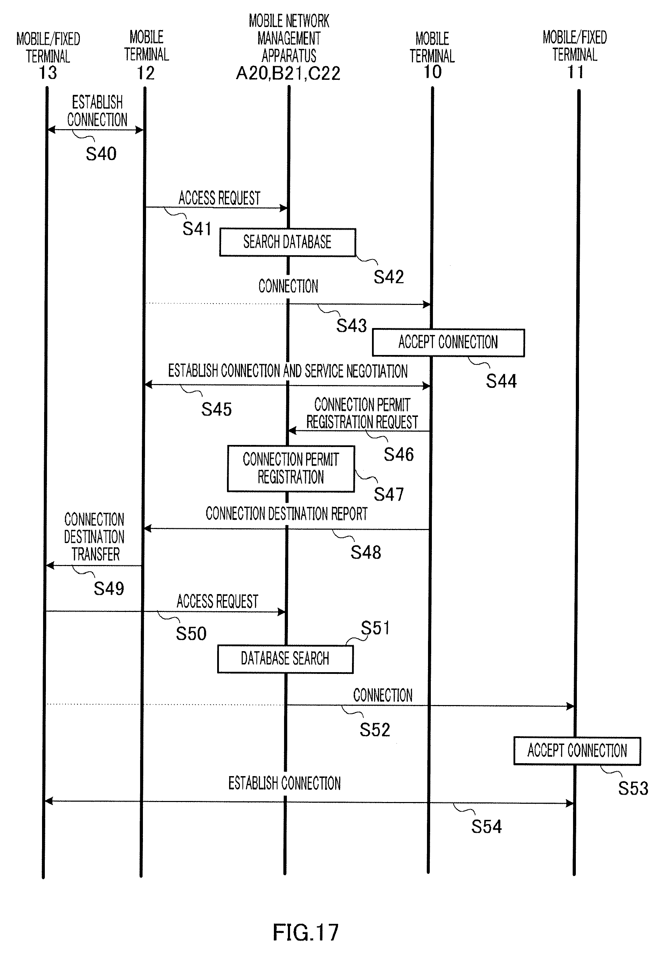

Next, a description is given with reference to FIG.17 to FIG.19 of a case where mobile terminal 12 is also an administrator terminal and a mobile/fixed terminal 13 is connected under its management, in network system 100 of FIG.11.

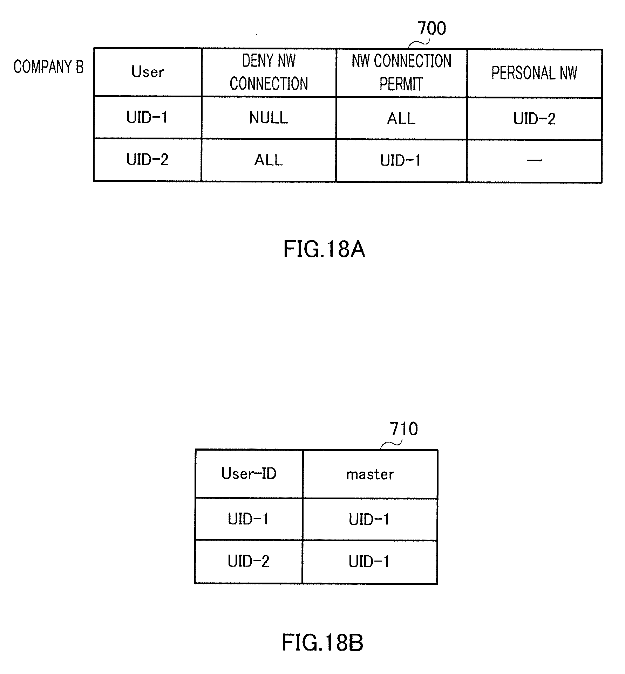

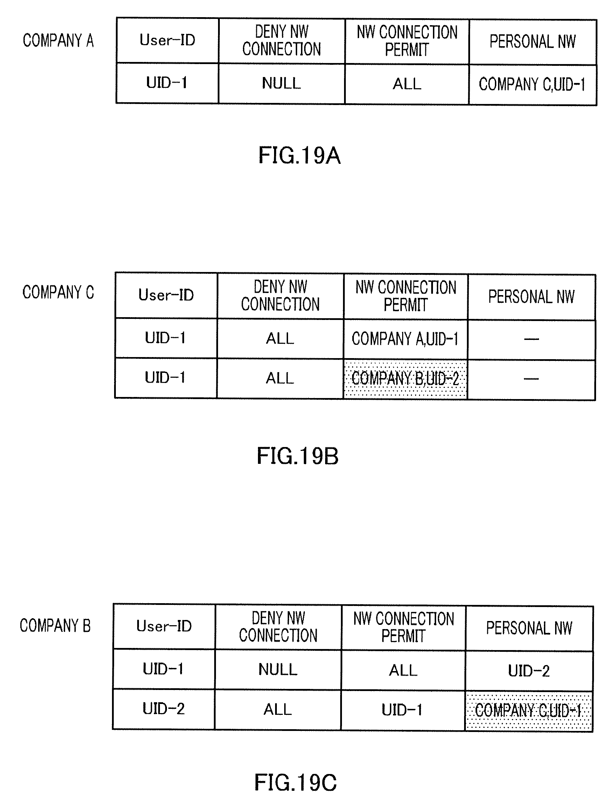

FIG.17 is a ladder chart showing the operation upon an access request between mobile/fixed terminals 11 and 13 by mobile terminals 10 and 12. FIG.18 (a) and (b) are views showing an example of terminal connection management DB 700 and terminal attribute management DB 710 administered by mobile network management apparatus B21. FIG.19(a) to (c) are views showing registration results for each administered terminal connection management DB 500, 600 and 700 at mobile network management apparatus A20, mobile network management apparatus B21 and mobile network management apparatus C22 as a result of implementing connection permit registration processing in the operation of FIG.17.

In terminal connection management DB 700 of FIG.18(a), user identifier information "UID-2", NW connection deny information "ALL" and NW connection permit information "UID-1" are already registered as terminal connection management information for mobile/fixed terminal 13 under management of mobile terminal 12.

Further, in terminal attribute management DB 710 of (b) of the same, user identifier information "UID-2" for mobile/fixed terminal 13 and this administrator terminal information "UID-1" are already registered as mobile terminal attribute information for mobile/fixed terminal 13.

Next, a description is given with reference to the ladder chart of FIG.17 of the operation upon an access request between mobile/fixed terminals 11, 13 by mobile terminal 10 and 12.

In FIG.17, when a connection is established between mobile/fixed terminal 13 and mobile terminal 12 (S40), when an access request from mobile terminal 12 to mobile terminal 10 is sent to mobile network management apparatus A20 via mobile network B31 and mobile network management apparatus B21 (S41 and S42), mobile network management apparatus A20 executes a database search process using the received access request (S42). At this time, database search processing of FIG.12 is executed at mobile network management apparatus B21 and mobile network management apparatus A20. It is then confirmed that the connection destination "company A UID-1" is a mobile terminal registered in mobile network A30 that is its own operator's management network, and a channel connection is made between mobile terminal 12 and mobile terminal 10 (S43).

When connection from mobile network management apparatus A20 is accepted (S44), mobile terminal 10 establishes a connection with mobile terminal 12 (S45). At this time, a user identifier "company B UID-2" for mobile/fixed terminal 13 constituting a registration target is transmitted. Next, mobile terminal 10 sends a connection permit registration request set with registration request source "company A UID-1", registration target "company B UID-2" and registration request destination "company C UID-1" to mobile network management apparatus A20. When the connection permit registration request is received, mobile network management apparatus A20 executes connection permit registration processing (S47).

At this time the connection permit registration process of FIG. 13 is executed at mobile network management apparatus A20. At mobile network management apparatus A20, as registration request destination "company C UID-1" is not a mobile terminal registered in its own operator's management network, i.e. mobile network A30, the connection permit registration request is transferred to mobile network management apparatus C22.

At mobile network management apparatus C22, user identifier information "company B UID-2" of mobile/fixed terminal 13 is additionally registered as a new network connection permit destination in terminal connection management DB 600 shown in FIG.19(b) as a result of execution of the connection permit registration process of FIG.13.

Further, in terminal connection management DB 700 of mobile network management apparatus B21, as shown in FIG.19(c), user identifier information "company C UID-1" of mobile/fixed terminal 11 of the registration request destination is additionally registered in the column "personal NW" corresponding to the user identifier "UID-2" of mobile/fixed terminal 13 that is the registration target.

Returning to FIG.17, when connection permit registration processing for mobile network management apparatus A20, B21 and C22 is finished and report of the registration completion is received, connection destination report is sent to mobile terminal 12 together with user identifier information "company C UID-1" of mobile/fixed terminal 11 that is the connection destination (S48). An example is shown for a method for mobile terminal 10 to report the connection destination as S48 but it is also possible for mobile network management apparatus A20, B21 or C22 to carry out connection destination report with respect to mobile terminal 12 upon report of registration completion to mobile terminal 10. When connection destination report is received together with user identifier information "company C UID-1", mobile terminal 12 transfers this to mobile/fixed terminal 13 (S49).

When mobile/fixed terminal 13 receives connection destination report, an access request set with this connection destination "company C UID-1" is sent to mobile network management apparatus C22 via mobile network management apparatus B21 (S50 and S51). Upon receiving the access request from mobile/fixed terminal 13, mobile network management apparatus C22 executes database search processing (S51) in the same way as described above (S42). At this time, in terminal connection management DB 700 in mobile network management apparatus C22, "company B UID-2" is already registered in "NW connection permit" of connection destination "UID-1", and a process for connecting a channel from mobile/fixed terminal 13 to mobile/fixed terminal 11 is executed (S52).

When a connection from mobile network management apparatus C22 is accepted (S53), mobile/fixed terminal 11 establishes a connection with mobile/fixed terminal 13 (S54).

In this way, in the network system of Embodiment 2, in the event that an access request is sent from a terminal outside a personal network configured from a plurality of communication terminals connected to a plurality of different networks, the mobile terminal receiving the access request extracts information necessary for connection permission and sends a connection permit registration request to the mobile network management apparatus. The management apparatus for the mobile network the terminals constituting the personal network are connected to then additionally registers connection permit information in the database managing connections of the mobile terminals in the personal network based on information received with the connection permit registration request.

In the event that association with a terminal in a personal network of this communication terminal information is not yet registered upon an access request from a communication terminal connected to an external network to a personal network constituted by a plurality of communication terminals connected to a plurality of different networks, it is possible to carry out registration processing for the possibility of connect to this communication terminal dynamically, the registration procedure from the communication terminal outside the personal network becomes straightforward, and access to inside the personal network is possible.

### (Embodiment 3)

In the description of Embodiments 1 and 2, an example is shown of a case where the registration request destination consists of one terminal in the connection permit registration request of S15 of FIG.5 and S46 of FIG. 17, but it may also be possible to carry out connection permission registration processing to a plurality of terminals with a one-time request. In this case, for example, in Embodiment 1, it is possible to carry out connection permit registration processing to a plurality of terminals by specifying a plurality of registration request destinations at the same time in S15 of FIG.5.

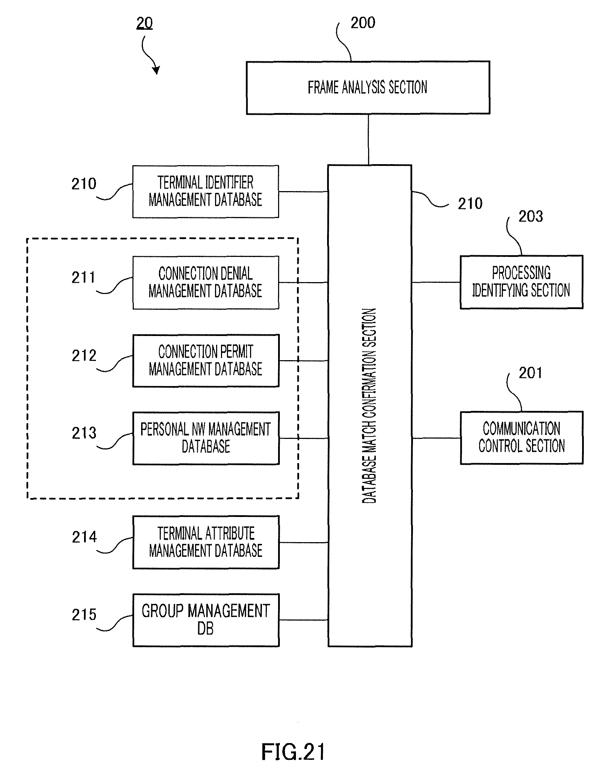

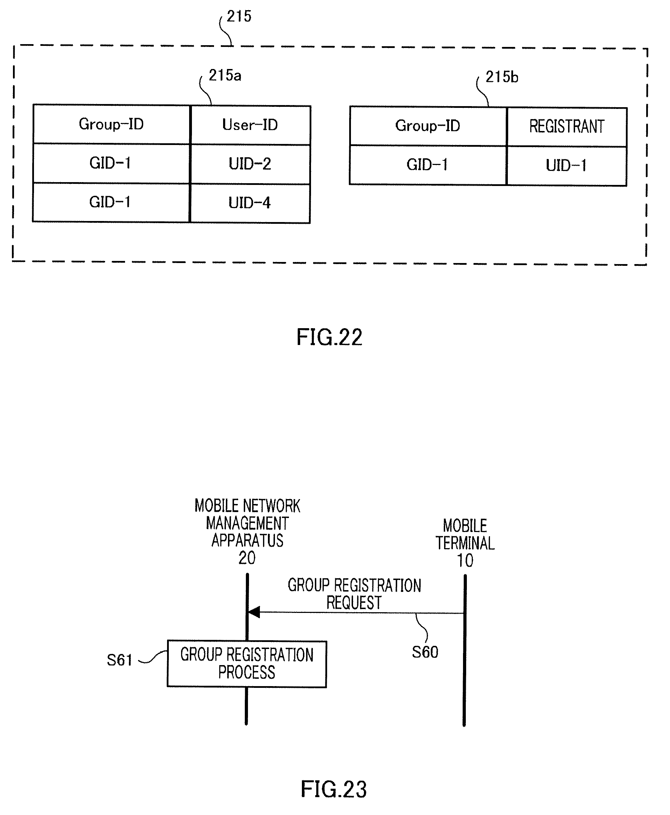

Further, in another method, as shown in FIG.21, a method is considered where mobile network management apparatus 20 is in possession of a group management DB 215 at the mobile network management apparatus shown in FIG.2. At group management database 215, a plurality of terminals are put into groups so that, for example, as shown in FIG.22, group registration is carried out taking terminal group table 215a associating group ID "GID-1" and terminal user identifiers "UID-2", "UID-4" and group registrant table 215b associating "UID-1" that is the producer of group ID "GID-1" as a registrant, and connection permit registration processing to a plurality of terminals is carried out by designating group ID "GID-1" for this group as the registration request destination.

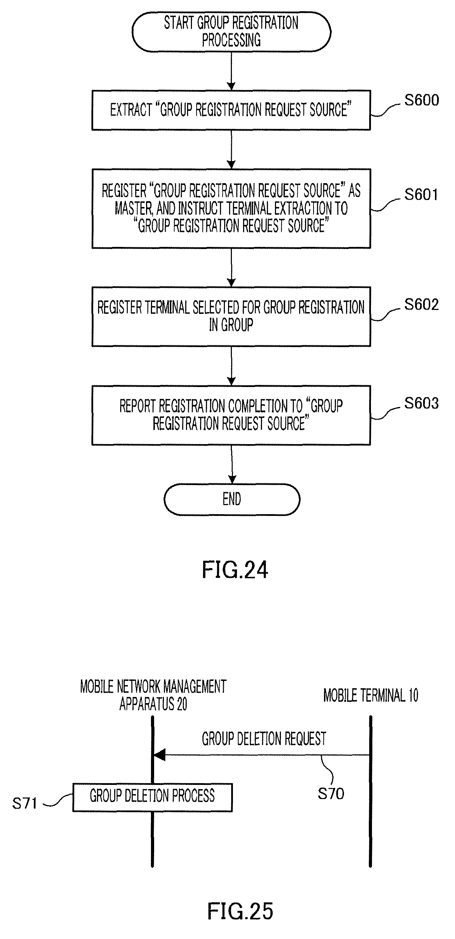

Next, a description is given with reference to the ladder flowchart shown in FIG.23 and the flowchart shown in FIG.24 of an example of this group registration processing.

In FIG.23, when a group registration request set with a group registration request source is sent from mobile terminal 10 to mobile network management apparatus 20 (S60), atmobilenetworkmanagement apparatus 20, after it is detected that this request is a group registration request by process determining section 203, group registration processing is executed (S61).

In FIG.24, DB match confirmation section 202 and frame analysis section 200 in mobile network management apparatus 20 analyze the frame of the group registration request and extract the group registration request source (step S600). Next, DB match confirmation section 202 extracts the terminal where the group registration request source is registered as the "master" from terminal attribute management DB 214 and shows the result to the group registration request source (step S601).

Next, a group identifier is set for terminals selected from in the results shown to the group registration request source, this is registered in terminal group table 215a in group management database 215 (step S602), the group registration request source is reported completion of registration (step S603), and this process is complete.

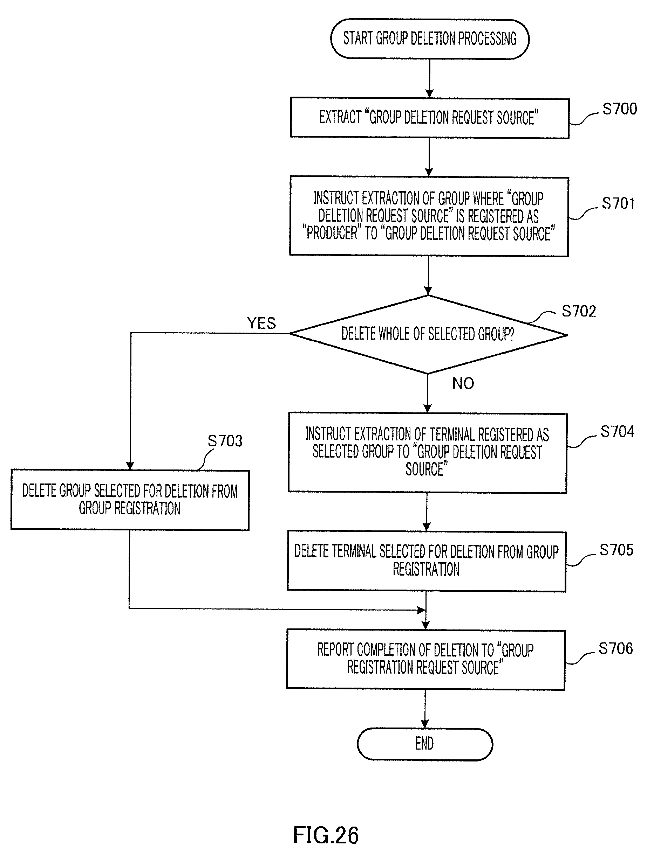

Further, a description is given with reference to the ladder chart shown in FIG.25 and the flowchart shown in FIG.26 of an example of group deletionprocessing.

In FIG.25, when a group deletion request set with a group deletion request source is sent from mobile terminal 10 to mobile network management apparatus 20 (S70), at mobile network management apparatus 20, after it is detected that this request is a group deletion request by means of process determining section 203, group deletion processing is executed (S71).

In FIG.26, DB match confirmation section 202 and frame analysis section 200 in mobile network management apparatus 20 analyze the frame of the group deletion request and extract the group deletion request source (step S700). Next, DB match confirmation section 202 extracts the group with the group deletion request source registered as "registrant" from group registrant table 215b in groupmanagement database 215 and shows the results to the group deletion request source (step S701).

Next, a request from the group deletion request source is determined (step S702), and in the event of a request to delete an entire group (step S702: YES), the group selected for deletion is deleted from terminal group table 215a in group management database 215 (step S703), completion of deletion is reported to the group deletion request source (step S706), and this process is complete. Further, in step S702, in the event that the deletion request is for individual terminals registered as a group (step S702: NO), terminals registered as selected groups are extracted and shown to the group deletion request source (step S704). After this, terminals selected for deletion are deleted from groups from terminal group table 215a in group management database 215 (step S705), the group deletion request source is reported completion of deletion (step S706), and this process is complete.

An example is shown for Embodiment 1 taking an example of connection permit registration processing to a plurality of terminals but it is a straightforward analogy that is also applicable to Embodiment 2.

### (Embodiment 4)

In Embodiments 1, 2 and 3, that representing the mobile terminal and the mobile/fixed terminal is seen to be management terminals of a personal network such as a home network or PAN (Private Area Network) etc. so that application enabling management of accesses to in elements of a personal network is possible. Further, management at a device level is possible by applying the present invention to devices in these personal network elements.

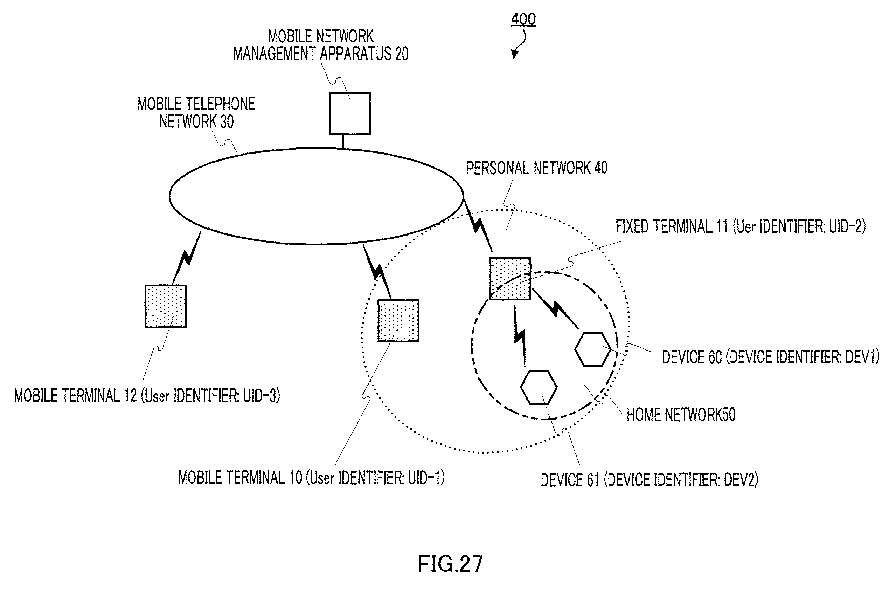

As an example of this, a description is given using FIG.27 of an example system configuration for a case of a fixed terminal where the mobile/fixed terminal 11 shown in FIG.1 of Embodiment 1 functions as a home network management terminal. At network system 400 shown in FIG.27, home network 50 centered on fixed terminal 11 exists, and device 60 and device 61 connected to fixed terminal 11 also exist in home network 50. Here, examples of device 60 and device 61 may be a HDD recorded with moving images such as television programs and audio or a stereo, PC, or network-compatible game equipment, etc.

Device 60 and device 61 have DEV1 and DEV2, respectively, as device identifiers. If this device identifier can be identified by an operator, the device identifier can be handled in the same way as the user identifier described in Embodiment 1, and at mobile network management apparatus 20, connection management in individual device units is also possible by carrying out connection management relating to connection to device 60.

Regarding connection management of this device, by carrying out management using fixed terminal 11, for example, connections to home network 50 (i.e. fixed terminal 11) of FIG.27 are managed using mobile network management apparatus 20 as described in Embodiment 1, and connection to individual devices 60 and 61 in home network 50 may also be administered using fixed terminal 11. By separating management in this manner, there are the drawbacks that the functions required at fixed terminal 11 increase and more processing power is required but it is also possible to avoid concentration of load on mobile network management apparatus 20 so that even with devices that do not possess an identifier in home network 50, identification through a method of physical connection to fixed terminal 11 is possible, and the degree of freedom of utilization of the device is increased.

As shown above, upon an access from an external personal network, via mobile network 30, to device 60 or device 61, in the event that association with the device in the personal network is not yet registered for this communication terminal information, it is possible to dynamically carry out registration processing as to whether or not connection to a communication terminal is possible, a registration procedure from outside the personal network is straightforward, and access to inside the personal network is possible.

In Embodiments 1, 2, 3 and 4 described above, a case is shown where a mobile terminal or mobile/fixed terminal and management terminal "master" are registered one-to-one but a configuration for a case where a mobile terminal belonging to a certain personal network or a mobile/fixed terminal is an administrator terminal belonging to the personal network and an administrator terminal belonging to another personal network are shared, i.e. a registration in a one-to-many relationship, can also be considered. The present invention can therefore also be applied to this kind of personal network configuration.

The present application is based on Japanese Patent Application No.2005-195616, filed on July 4, 2005, and Japanese Patent Application No.2006-029060, filed on February 6, 2006, the entire contents of which are expressly incorporated herein by reference.

### Industrial Applicability

The present invention is therefore useful as a personal network system etc. where, upon an access request from the communication terminal outside a personal network, in the event that association of this communication terminal information with a terminal inside the personal network is not yet registered, it is possible to dynamically carry out registration processing as to whether or not connection to the communication terminal in the personal network is possible, the registration procedure from the communication terminal outside the personal network is straightforward, and access to inside the personal network is possible.

## Claims

1. A personal network management method managing a personal network comprising a plurality of communication terminal apparatus connected to a network, comprising:
a terminal connection management step managing registration of communication terminal information for a connection destination in a terminal connection management memory every communication terminal apparatus constituting the personal network;
a receiving step receiving connection requests from communication terminal apparatus outside the personal network to communication terminal apparatus in the personal network;
a search process of extracting connection source communication terminal information and connection destination communication terminal information from the received connection request, and search connection source communication terminal information from the terminal connection management memory; and
a registration step of associating and registering in the terminal connection management memory communication terminal information in the personal network and the communication terminal information of the connection source if the communication terminal information in the personal network and the communication terminal information of the connection source are registered in a associating manner at the terminal connection management memory.

2. The personal network management method of claim 1, wherein:
the plurality of communication terminal apparatus constituting the personal network comprise terminal apparatus for management use and communication terminal apparatus under the management of the terminal apparatus for management use;
in the terminal connection management step, management takes place so that terminal information for management use is registered in the terminal attribute connection management section every communication terminal apparatus; and
in the search step, each terminal apparatus for management use of communication terminal apparatus of the connection source and the connection destination is searched from the terminal attribute management section based on the extracted communication terminal information for the connection source and the communication terminal information for the connection destination, and determines whether or not the connection request is possible according to whether or not each terminal apparatus for management use for the communication terminal apparatus for the connection source and the connection destination are the same.

3. The personal network management method of claim 1,
wherein:
the plurality of communication terminal apparatus constituting the personal network comprise terminal apparatus for management use and communication terminal apparatus under the management of the terminal apparatus for management use;
in the terminal connection management step, management takes place so that terminal information for management use is registered in the terminal attribute management memory every communication terminal apparatus; and
in the registration step, it is determined whether the connection request source is capable of changing information for the terminal connection memory of the connection request destination, and if change is possible, information associating the connection subject to the terminal connection management memory of the connection request destination is registered.

4. A personal network management method managing a personal network comprising a plurality of communication terminal apparatus respectively connected to a plurality of different networks, comprising:
a terminal connection management step managing registration of communication terminal information for a connection destination associated with connected network information in a terminal connection management memory every communication terminal apparatus constituting the personal network;
a receiving step receiving connection requests from communication terminal apparatus outside the personal network to communication terminal apparatus in the personal network;
a search step of extracting communication terminal information for a connection source, network information for the connection destination and communication terminal information from the received connection request, and if the communication terminal of the connection destination does not belong to the same network, transferring the information to the network the connection destination belongs to, and searching each item of extracted information from the terminal connection management memory; and
a registration step of associating and registering in the terminal connection management memory communication terminal information in the personal network and communication terminal information for the connection source if association of communication terminal information in the personal network and communication terminal information of the connection source is associated in the terminal connection management memory at the network the communication terminal apparatus belongs to in the personal network.

5. A personal network management apparatus managing a personal network comprising a plurality of communication terminal apparatus connected to a network, comprising:
a terminal connection management section managing registration of communication terminal information for a connection destination every communication terminal apparatus constituting the personal network;
a receiving section receiving connection requests from communication terminal apparatus outside the personal network to communication terminal apparatus in the personal network;
a search section extracting connection source communication terminal information and connection destination communication terminal information from the received connection request, and search connection source communication terminal information from the terminal connection management section; and
a registration section associating and registering in the terminal connection management section communication terminal information in the personal network and the communication terminal information of the connection source if the communication terminal information in the personal network and the communication terminal information of the connection source are registered in a associating manner at the terminal connection management section.

6. The personal network management apparatus of claim 5, wherein:
the plurality of communication terminal apparatus constituting the personal network comprise terminal apparatus for management use and communication terminal apparatus under the management of the terminal apparatus for management use;
at the terminal connection management section, management takes place so that terminal information for management use is registered in the terminal attribute management section every communication terminal apparatus; and
at the search section, each terminal apparatus for management use of communication terminal apparatus of the connection source and the connection destination is searched from the terminal attribute management section based on the extracted communication terminal information for the connection source and the communication terminal information for the connection destination, and it is determined whether or not the connection request is possible according to whether or not each terminal apparatus for management use for the communication terminal apparatus for the connection source and the connection destination are the same.

7. The personal network management apparatus of claim 5, wherein:
the plurality of communication terminal apparatus constituting the personal network comprise terminal apparatus for management use and communication terminal apparatus under the management of the terminal apparatus for management use;
at the terminal connection management section, management takes place so that terminal information for management use is registered in the terminal attribute management section every communication terminal apparatus; and
at the registration section, it is determined whether the connection request source is capable of changing information for the terminal connection memory of the connection request destination, and if change is possible, information associating the connection subject to the terminal connection management memory of the connection request destination is registered.

8. A personal network management apparatus managing a personal network comprising a plurality of communication terminal apparatus respectively connected to a plurality of different networks, comprising:
a terminal connection management section managing registration of communication terminal information for a connection destination associated with connected network information every communication terminal apparatus constituting the personal network;
a receiving section receiving connection requests from communication terminal apparatus outside the personal network to communication terminal apparatus in the personal network;
a search section extracting communication terminal information for a connection source, network information for the connection destination and communication terminal information from the received connection request, and if the communication terminal of the connection destination does not belong to the same network, transferring the information to the network the connection destination belongs to, and searching each item of extracted information from the terminal connection management section; and
a registration section associating and registering in the terminal connection management section communication terminal information in the personal network and communication terminal information for the connection source if association of communication terminal information in the personal network and communication terminal information of the connection source is associated in the terminal connection management section at the network the communication terminal belongs to in the personal network.

## Amended claims

### Amended claims under Art. 19.1 PCT

**1.** Amended) A personal network management method for managing a personal network comprising a plurality of communication terminal apparatuses connected with a network, the method comprising:
a receiving step of receiving a connection request from a communication terminal apparatus outside the personal network to a communication terminal apparatus inside the personal network; and
a determining step of determining whether or not the connection is possible based on an identifier of the communication terminal apparatus acquired upon the connection request.

**2.** (Amended) A personal network management method for managing a personal network comprising a plurality of communication terminal apparatuses connected with a network, the method comprising:
a terminal connection management step of managing registration of a communication terminal identifier of a connection destination in a terminal connection management memory for every communication terminal apparatus constituting the personal network;
a receiving step of receiving a connection request from a communication terminal apparatus outside the personal network to a communication terminal apparatus inside the personal network;
a search step of extracting a communication terminal identifier of a connection source and a communication terminal identifier of a connection destination from the received connection request, and searching the terminal connection management memory for the communication terminal identifier of the connection destination; and
a registration step of associating and registering in the terminal connection management memory a communication terminal identifier of the communication terminal apparatus inside the personal network and the communication terminal identifier of the connection source, if the communication terminal identifier of the communication terminal apparatus inside the personal network and the communication terminal identifier of the connection source are not associated and registered in the terminal connection management memory.

**3.** (Amended) The personal network management method of claim 2, wherein:
the plurality of communication terminal apparatuses constituting the personal network comprise a terminal apparatus for personal network management use and a communication terminal apparatus under the management of the terminal apparatus for personal network management use; and
the terminal connection management step comprises managing registration of a terminal identifier for personal network management use in a terminal attribute connection management memory for every communication terminal apparatus.

**4.** (Amended) The personal network management method of claim 3, wherein the search step comprises searching the terminal attribute connection management memory for the terminal identifier for personal network management use based on a communication terminal identifier of the connection source and the communication terminal identifier of the connection destination, and, depending on whether or not the communication terminal identifier of the connection source is the same as the terminal identifier for personal network management use, determining whether or not the connection request is possible.

**5.** (Amended) The personal network management method of claim 3, wherein:
the plurality of communication terminal apparatuses constituting the personal network comprise a terminal apparatus for personal network management use and a communication terminal apparatus under the management of the terminal apparatus for personal network management use; and
the registration step comprises determining whether a registration request source is able to change information in the terminal attribute connection memory of a connection request destination, and, if the change is possible, registering information in association with a connection target in the terminal connection management memory of the registration request destination.

**6.** (Amended) A personal network management method for managing a personal network comprising a plurality of communication terminal apparatuses respectively connected with a plurality of different networks, the method comprising:
a terminal connection management step of managing registration of a communication terminal identifier of a connection destination in association with connected network information in a terminal connection management memory for every communication terminal apparatus constituting the personal network;
a receiving step of receiving a connection request from a communication terminal apparatus outside the personal network to a communication terminal apparatus inside the personal network;
a search step of extracting a communication terminal identifier of a connection source and a communication terminal identifier and network information for a connection destination from the received connection request, and, if the communication terminal of the connection destination does not belong to a same network, transferring the information to a network the connection destination belongs to, and searching the terminal connection management memory for each item of the extracted information; and
a registration step in a network the communication terminal inside the personal network belongs to, of associating and registering a communication terminal identifier of the communication terminal apparatus inside the personal network and the communication terminal identifier of the connection source in the terminal connection management memory, if the communication terminal identifier of the communication terminal apparatus inside the personal network and the communication terminal identifier of the connection source are not associated and registered in the terminal connection management memory.

**7.** (Amended) A personal network management apparatus for managing a personal network comprising a plurality of communication terminal apparatuses connected with a network, the apparatus comprising:
a terminal connection management section that manages registration of a communication terminal identifier of a connection destination for every communication terminal apparatus constituting the personal network;
a receiving section that receives a connection request from a communication terminal apparatus outside the personal network to a communication terminal apparatus inside the personal network;
a search section that extracts a communication terminal identifier of a connection source and the communication terminal identifier of the connection destination from the received connection request, and searches the terminal connection management section for the communication terminal identifier of the connection destination; and
a registration section that associates and registers in the terminal connection management section a communication terminal identifier of the communication terminal apparatus inside the personal network and the communication terminal identifier of the connection source, if the communication terminal identifier of the communication terminal apparatus inside the personal network and the communication terminal identifier of the connection source are not associated and registered in the terminal connection management section.

**8.** (Amended) The personal network management apparatus of claim 7, wherein:
the plurality of communication terminal apparatuses constituting the personal network comprise a terminal apparatus for personal network management use and a communication terminal apparatus under the management of the terminal apparatus for personal network management use; and
the terminal connection management section manages registration of a terminal identifier for personal network management use in a terminal attribute connection management section for every communication terminal apparatus.

**9.** (Added) The personal network management apparatus according to claim 8, wherein the search section searches the terminal attribute management section for the terminal identifier for personal network management use for the communication terminal apparatus of the connection destination, and determines whether or not the connection request is possible based on whether or not the communication terminal identifier of the connection source and the terminal identifier for personal network management use are the same.

**10.** (Added) The personal network management method of claim 8, wherein:
the plurality of communication terminal apparatuses constituting the personal network comprise a terminal apparatus for personal network management use and a communication terminal apparatus under the management of the terminal apparatus for personal network management use; and
the registration section determines whether a registration request source is able to change information in the terminal connection management section of a connection request destination, and, if the change is possible, registers information in association with a connection target in the terminal connection management section of the registration request destination.

**11.** (Added) A personal network management apparatus for managing a personal network comprising a plurality of communication terminal apparatuses respectively connected with a plurality of different networks, the apparatus comprising:
a terminal connection management section that registers a communication terminal identifier of a connection destination in association with connected network information for every communication terminal apparatus constituting the personal network;
a receiving section that receives a connection request from a communication terminal apparatus outside the personal network to a communication terminal apparatus inside the personal network;
a search section that extracts a communication terminal identifier of a connection source and a communication terminal identifier and network information for a connection destination from the received connection request, and, if a communication terminal of the connection destination does not belong to a same network, transfers the information to a network the connection destination belongs to, and searches the terminal connection management section for each item of the extracted information; and
a registration section that associates and registers in the terminal connection management section a communication terminal identifier of the communication terminal apparatus inside the personal network and the communication terminal identifier of the connection source, if the communication terminal identifier of the communication terminal apparatus inside the personal network and the communication terminal identifier of the connection source are not associated and registered in the terminal connection management section.
